# EUROPEAN PATENT APPLICATION

(11) **EP 2 586 556 A1**
(43) Date of publication of application: **01.05.2013**
(21) Application number: 11187105.9
(22) Date of filing: 28.10.2011
(51) Int. Cl.: B23D 57/00

(54) **Quick exchange squarer wire-guides without alignment**

(71) Applicant: Applied Materials Switzerland SA, 1033 Cheseaux-sur-Lausanne (CH)
(72) Inventor: Rosset, Jean-Marc, 1422 Grandson (CH); Robbe, Arnaud, 25160 Malbuisson (CH); Speyrer, John, 1029 Villars Sainte Croix (CH)
(74) Representative: Zimmermann & Partner

(57) **Abstract**

A wheel unit (356; 456; 656; 756) for a rotating wire guide (336) and a wire guide configured for a wire saw device (100) is described. The wheel unit includes a radially outer surface (357; 457) for receiving a wire guiding structure (360; 460; 560; 660; 760) in a predetermined position; and a restricting arrangement (370; 470; 670) for restricting the usage of a portion of the wire guiding structure during operation. Further, a method for guiding a wire via a wire guide (336) configured for a wire saw device (100) is described. The method includes placing a tire having a wire guiding structure (360; 460; 560; 660; 760) on a wheel unit (356; 456; 656; 756) of the wire guide (336); and blocking a portion of the wire guiding structure (360; 460; 560; 660; 760) during operation of the wire guide (336).

## Description

### TECHNICAL FIELD OF THE INVENTION

Embodiments of the present invention relate to a pulley for and in a wire saw device, a wire saw device and a method for guiding a wire in a wire saw device. More particularly, they relate to a pulley configured for a wire saw device, and a wire saw device for cutting or sawing hard materials such as blocks of silicon or quartz, e.g., for cutting silicon wafers, for a squarer, for a cropper or the like.

### BACKGROUND OF THE INVENTION

Wire saw devices exist for cutting blocks or bricks, thin slices, e.g. semiconductor wafers, from a piece of hard and brittle material such as silicon. In such devices a stretched wire is fed from a spool and is both guided and tensioned by pulleys for guiding the wire in the cutting area. The wire that is used for sawing is generally provided with an abrasive material. As one option, the abrasive material can be provided as a slurry. This may be applied shortly before the wire touches the material to be cut. Thereby, the abrasive is carried to the cutting position by the wire for cutting the material. As another option, the abrasive can be provided on the wire with a coating. For example, diamond particles can be provided on a metal wire, e.g. with a coating, wherein the diamond particles are imbedded in the coating of the wire. Thereby, the abrasive is firmly connected to the wire.

Wire saw devices are used in a plurality of industrial fields such as semiconductor business or solar business. Thereby, throughput and costs of the manufactured articles are of steadily increasing consideration. For wire saw devices cutting of the hard material such as silicon needs to be done at very high precision, that is, within a few tens of microns or even microns and at a very high speed. Thereby, the wire is transported through the wire saw device at a very high speed and movable parts for cutting the material are moved with micron precision. The very high precision can not be provided if the wear of the components in the wire saw device is too large. Since these components need to be replaced or furbished up in order to provide the desired throughput and position, they need to be replaced on a regular basis at the production side where the wire saw device is operated. This can significantly increase the cost of ownership (COO) because the respective components need to be either on stock for immediate replacements or the wire saw device will not be in operation, for example during re-furbishing of the components.

Accordingly there is a desire to reduce the cost of ownership of a wire saw device and provide for easier maintenance while still providing the desired precision and throughput.

### SUMMARY OF THE INVENTION

In light of the above, a wheel unit according to independent claim 1, a wire guide according to independent claim 7, and a method according to claim 12 are provided. Further aspects, advantages, and features of the present invention are apparent from the dependent claims, the description, and the accompanying drawings.

According to one embodiment, a wheel unit for a rotating wire guide having a rotation axis, the wire guide is configured for a wire saw device having a wire, is provided. The wheel unit includes a radially outer surface for receiving a wire guiding structure in a predetermined position, and a restricting arrangement for restricting the usage of a portion of the wire guiding structure during operation.

According to another embodiment, a wire guide configured for a wire saw device having a wire is provided. The wire includes a wheel unit. The wheel unit includes a radially outer surface for receiving a wire guiding structure in a predetermined position, and a restricting arrangement for restricting the usage of a portion of the wire guiding structure during operation. The wire guide further includes a tire. The tire includes a tire portion having a radially inner surface adapted to be received at a radially outer surface of the wheel unit, and a wire guiding structure provided at a radially outer surface of the tire portion for guiding the wire.

According to yet another embodiment, a method for guiding a wire via a wire guide configured for a wire saw device is provided. The method includes placing a tire having a wire guiding structure on a wheel unit of the wire guide, and blocking a portion of the wire guiding structure during operation of the wire guide.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:
- Fig. 1: shows a schematic view of a wire saw device according to embodiments described herein;
- Figs. 2a and 2b: show a wire guide as it is commonly used in wire saw devices and an enlarged view of a portion of the wire guide;
- Figs. 3a and 3b: show a schematic view of a wire guide according to embodiments described herein having a wheel unit and a tire;
- Fig. 4: shows a schematic view illustrating further embodiments of wire guides according to embodiments described herein;
- Fig. 5: is a schematic view of a tire for a wire guide according to embodiments described herein;
- Fig. 6: is a schematic view of a wire guide according to embodiments described herein during operation;
- Figs. 7a and 7b: are a schematic side and top view of a wire guide having a wheel unit and a tire according to embodiments described herein; and,
- Fig. 8: is a flow diagram of a method for guiding a wire according to embodiments described herein.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

Furthermore, in the following description a wire management unit will be understood as a device handling the supply of wire to a cutting area or working area of a wire saw device, such as a cropper, a squarer, or a wafer cutting wire saw. Typically, the wire saw includes a wire guide for transporting and guiding the wire in a wire moving direction while the wire management unit provides control of the wire tension. Furthermore, the wire provided by the wire management unit forms a wire web in the cutting area. Often, a wire web will be considered as the web formed by a single wire management unit. It should be understood that a wire web may contain more than one working area which is defined as an area in which a sawing process is performed. Thus, according to some embodiments described herein, a wire web can have multiple areas that are formed by a wire from different wire management unit.

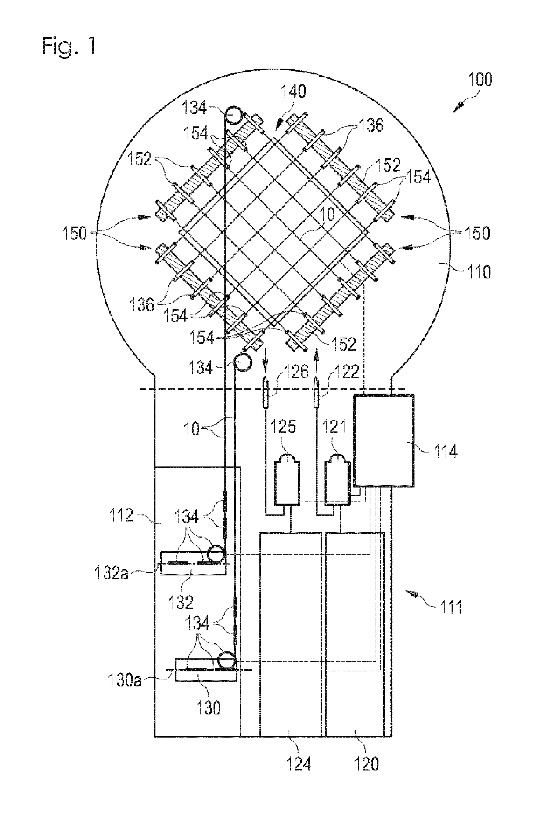

Fig. 1 shows a wire saw device 100. As can be seen from the pattern of the wire 10 forming the wire web in the wire web compartment 110, the example shown in Fig. 1 illustrates a squarer. The housing of the wire saw device is separated into different areas as indicated by the dotted line. The wire web is formed in the wire web compartment 110. Further, a housing portion 111, which houses further components and equipment of the wire saw device 100 is provided. For example, a wire handling device compartment 112 and an electrical cabinet 114 can be provided. Within the further housing portion 111, tanks 120 and 124 as well as respective pumps 121 and 125 can also be provided.

According to some embodiments, which can be combined with other embodiments described herein, the first tank 120 can be used for unused cooling fluid, e.g. in the case where the wire saw device is operated with diamond wire, or can be used e.g. for unused (fresh) slurry, in the case where the wire saw device 100 is operated with a wire requiring additional abrasive. The pump 121 pumps the cooling fluid (or slurry, respectively) towards the desired position in the cutting area. This is indicated in Fig. 1 by conduit 122. The used cooling fluid (or slurry) may flow back through conduit 126 and is pumped by pump 125 into the second tank 124. In those cases where cooling fluid or slurry is used, a portion of the used consumable fluid can be re-used if it is reinserted into the tank 120. Thus, according to different embodiments, only a portion of the consumable fluid, all of the consumable fluid or none of the consumable fluid may be reused and, thus, be reinserted in tank 120. As one example, an additional valve might be provided in conduit 126 for selectively choosing the tank into which the used fluid is pumped. According to yet another example, a fluid connection between the tanks 124 and 120 can be provided in order to reinsert a portion of the used fluid in tank 120. According to different embodiments, as already described above, the consumable fluid can be cooling fluid or slurry. Generally, if slurry is used, the slurry also takes over the function of cooling the position at which the wire cuts the material

In the wire handling compartment 112, two handling sections for delivering the wire 10 to the cutting area and receiving the wire from the cutting area, respectively, are provided. According to some embodiments, which can be combined with other embodiments described herein, the wire is provided on a spool 132 rotating around the spool axes 132a. The wire is guided over a plurality of rollers 134 into the wire web compartment 110. Further pulleys 134 and 136 guide the wire 10 into the cutting area to form the wire web. Thereby, further pulleys (not shown) are required to guide the wire 10 from one pulley 136 to a further pulley 136. In order to avoid unnecessary complexity, these further pulleys are not shown in Fig. 1. After cutting, the wire is guided by a further pulley 134 towards the wire handling compartment 112 and is therein provided over pulleys 134 on the spool 130 rotating around the spool axes 130a.

According to yet further embodiments, which can be combined with other embodiments described herein, the wire handling system can be adapted for bi-directional use, such that in one direction the wire is fed from spool 132 to spool 130 and in a further direction, the wire is fed from spool 130 to spool 132. Thereby, according to typical implementations the two units corresponding to spools 130 and 132 include similar components such as pulleys or the like to have a corresponding wire handling in both sawing directions. The bi-directional use of the wire saw device may be of particular interest if diamond wire is used.

As indicated by the dotted lines in Fig. 1 the electrical cabinet 114 may serve to control the operation of the different components. For example, movement of the support 140, operation of the pumps 121 and 125, rotation of the spools 130 and 132 can be controlled. Further, additionally or optionally, the filling level of the tanks 120 and 124 can be measured and respective signals can be fed into the control unit. According to yet further embodiments, other control signals and monitoring signals can be fed to and from the electrical cabinet 114. For example signals from the motors driving the spools, from a wire tensioner, to a wire tensioner, pressure signals for feeding the consumable fluids like slurry or cooling fluid, or a wire break detection signal can be fed to and from the electrical cabinet. Even though an electrical cabinet 114 integrated in a wire saw device 100 is shown in Fig. 1, it is apparent to a person skilled in the art that an electrical cabinet or a control unit in general can be provided at a different location in the wire saw device, e.g., also external of the wire device, and corresponding control signals from and to the control unit can be provided accordingly.

The pulleys 136, which are provided on one side of the support 140, are typically connected by a common axis 152 such as a tube, a pipe, a rod or the like. Thereby, synchronous rotation of the pulleys 136 during sawing of the material with the wire 10 can be provided. The pulleys 136 with the axis 152 thereby form a wire guide 150 for the wire web. In order to form the web with high precision the pulleys are typically provided with one or more grooves for guiding the wire in the groove. According to some embodiments, as for example shown in Fig. 1, four wire guides 150 are provided in the wire saw device 100.

The number of wheels units (such as pulleys) and the position of the wheel units are depending on the configuration of the wire saw system, such as a squarer or cropper tool. However, each wheel must be aligned to guide the wire in the same direction within a predetermined precision. Wheel units as known in the art often provide a wire guiding structure. For instance, known wheel units provide grooves as wire guiding structure. Thereby, different approaches are known. The wire guiding structure may be cut into the wheel unit itself. For instance, the wire guiding structure of each wheel provides several grooves, such as about six to ten grooves. Each wheel only supports one wire. That means, when one groove is worn, the next groove is used for guiding the wire. For every groove change, an operator needs to realign the pulley to ensure a zero degree angle of the wire, i.e. to ensure a proper alignment of the groove used with the other wheel units guiding the wire. In the case the wheel unit is not well aligned, the wire may break during operation and may thus cause further errors and costs.

When all grooves of a wire guiding structure as known in the art are worn, the wire saw device has to be stopped for maintenance. Every wheel must be dismounted, typically by two operators due to the weight and the dimensions of the wheel unit.

Another example known in the art is to use coatings (such as plastic coatings) mounted on the wheel unit. The coatings are grooved in order to provide a wire guiding structure. In that way, only the coatings having a plurality of grooves are exchanged, and not the whole wheel unit. Using coatings for providing the wire guiding structure, addresses the problem of exchanging the wheel but does not increase the alignment safeness. The wire has to be aligned with the same effort as needed when the wire guiding structure is provided directly on the wheel.

According to embodiments described herein, a wheel unit and a wire guide having a wheel unit are provided, which facilitate the alignment of the wire after changing the wire guiding structure. Typically, by mounting a tire providing a wire guiding structure with two or more grooves on a wheel unit with a restricting arrangement, the exchange of the worn groove is facilitated and, at the same time, the need for alignment of the wire after changing to another groove can be avoided. According to some embodiments, the wheel unit with the restricting arrangement and the tire providing the wire guiding structure as described herein allow for a more secure change of a worn groove. Embodiments of the wire guiding device and the wheel unit, in particular in combination with the described tire, ensure a safe and easy handling and precise alignment of the wire in the guiding structure, and spare time and costs.

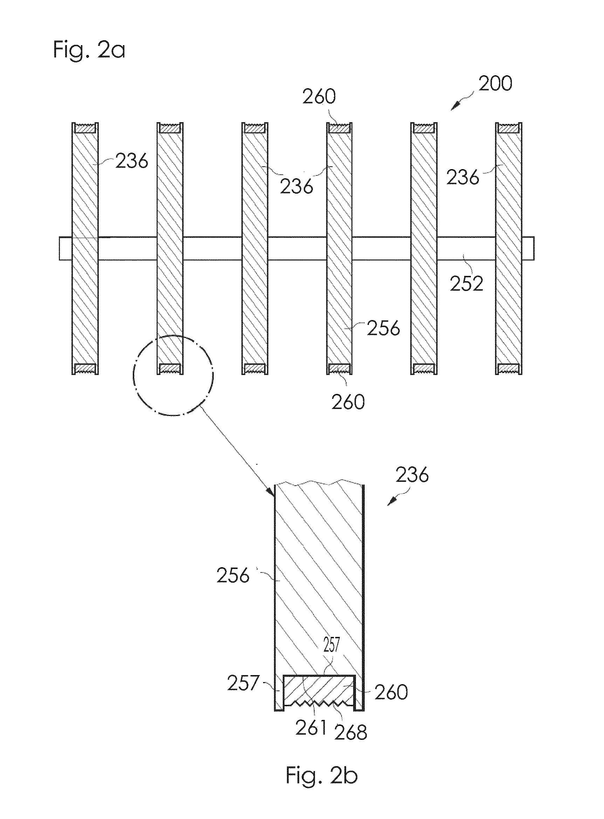

Wire guides which are commonly used, for example with a squarer, are illustrated with respect to Figs. 2a and 2b. Fig. 2a shows the axis 252 and the pulleys 236 which are provided with a wheel portion 256 and a wire guiding portion 260. In the enlarged view in Fig. 2b, the wheel portion 456 and the wire guiding portion 260 can be seen. In Figs. 2a and 2b, the wire guiding structure is provided in form of a separate tire having the wire guiding structure manufactured therein such that the tire can be detachably connected with the wheel unit and, thus, the wire guide.

The wire, which is guided under tension at high speed in the wire saw device, wears out the grooves 268 of the wire guiding portion 260 during use of the wire saw device. For this reason, a plurality of grooves (e.g. ten grooves) is provided in known wire saw devices such that the wire can be moved to a different, for example an adjacent groove when the first groove cannot be used anymore. Typically, the wire needs to be moved to another groove if the wear of the groove does not allow for the desired precision anymore. After all grooves 268 are worn out, the wire guide 260 is typically moved out of the wire saw device and the wire guiding structure is exchanged and/or the wheel 256 is re-coated. However, after exchange of the tire on the wheel, the wire guiding structure and the wire have to be aligned in order to ensure proper functions and secure wire guiding. For instance, when the tire of one wheel is exchanged, the new tire has to be aligned with the remaining wheels of a wire saw device.

Embodiments described herein allow for assuring proper alignment of the wire after changing the wire guiding structure while a change of groove is facilitated at the same time.

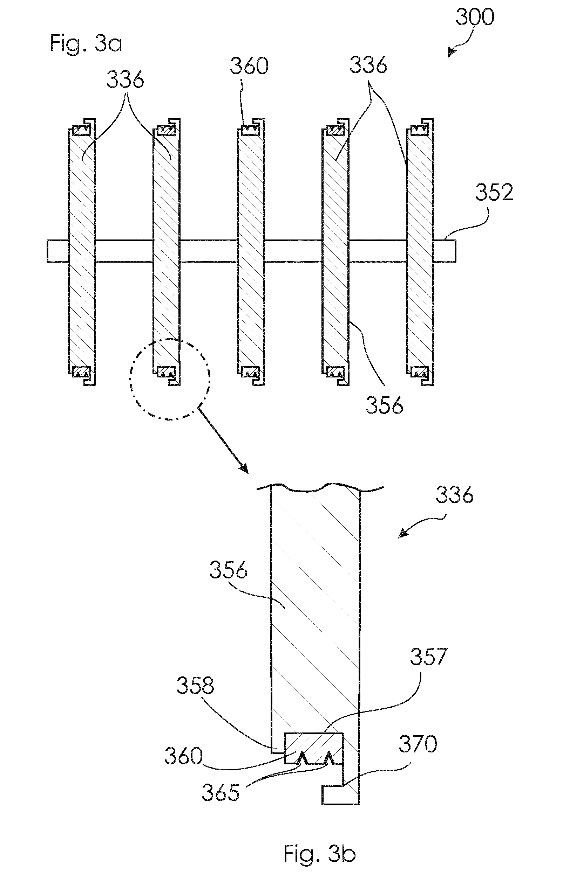

Fig. 3a shows an embodiment of a wire guide 300 as described herein. Fig. 3b shows an enlarged view of a portion of Fig. 3a as indicated in the drawings by the dashed-line circle. The wire guide 300 has an axis 352. The axis 352 can, for example be a rod, a tube, a pipe or the like. The pulleys 336 are mounted on the axis 352. According to some embodiments, which can be combined with other embodiments described herein, one or more pulleys 336 can be mounted to the axis 352. Typically, there can be four or more pulleys or there can be 2 to 12 pulleys, such as for example 4 to 8 pulleys. In the example shown in Fig. 3a five pulleys 336 are provided.

Each of the pulleys 336 includes a wheel unit 356 and a wire guiding structure such as a tire 360. As shown in Fig. 3b, the wheel unit 356 has a radially outer surface 357. The radially outer surface 357 is adapted for receiving the tire 360. Thereby, the tire 360 has a radially inner surface to be in contact with the surface 357.

Thereby, according to some embodiments, which can be combined with other embodiments described herein, the radially outer surface 357 of the wheel unit 356 is essentially flat in a direction parallel to the axis 352. This means, the wheel unit 356 does not have a wire guiding structure such as grooves or the like. To the contrary, the surface is adapted to receive the tire 360. According to yet further embodiment, which can be combined with other embodiments described herein, the radially outer surface 357 of the wheel unit 356 can have a bow, a step, a curvature, or the like along the direction parallel to the axis 352. However, this curve or step is not formed as a wire guiding groove or the like. For example it can be described such that the first derivation of the curvature does not change the sign, that structures like steps have the size of at least 4 mm in a direction parallel to the axis 352, and/or that these structures are not recesses with a fine tip such as a groove.

As shown in Fig. 3b, according to some embodiments, protrusions 358 such as a rim, an alignment element or the like can be provided. Thereby, the tire 360 can be detachably connected with the wheel unit 356 in a predetermined position, wherein small tolerances can be provided. The small tolerances allow for the desired precision in forming the wire web of the wire saw device. According to different embodiments, which can be combined with other embodiments described herein, a tolerance of ±150 µm or less for positioning the wire can be provided both in axial and radial directions. Typically, a tolerance can be in the direction parallel to the rotation axis ± 10 µm to ± 100µm, more typically ±30 µm to ±70 µm. According to yet further optional or alternative implementations, in a radial direction, typically a tolerance of ± 5 µm to ± 60µm, more typically of ± 10 µm to ± 30µm can be provided.

According to embodiments described herein, a tire 360 is provided radially outward of the wheel unit 356. Thereby, the tire 360 has a wire guiding structure 365, for example two or more grooves. Further, the wheel unit 356 typically provides a restricting arrangement 370, which is adapted for restricting a portion of the wire guiding structure 368. In the case that two grooves form the wire guiding structure 365, as exemplarily shown in Figs. 3a and 3b, the restricting arrangement 370 may be adapted for restricting the usage of one groove during operation of the wheel unit in a wire saw device. According to some embodiments described herein, the restricting arrangement may be part of the wheel unit.

According to some embodiments, the restriction element may be an element covering a part of the wire guiding structure. For instance, the restriction element may be a protrusion of the wheel unit, which is located so that a part of the wire guiding structure is covered. Typically, the restricting arrangement may be a part of the wheel unit or may be mounted to the wheel unit, e.g. by mounting elements, such as screws, bolts, a welding connection, or the like. According to other embodiments, the restricting arrangement may be a device fitting in a portion of the wire guiding structure. For instance, the restricting arrangement may be a key fitting in a groove of the wire guiding structure and thereby restricting the usage of a part of the wire guiding structure. According to further embodiments, the restricting arrangement may be a sheet which prevents the usage of a part of the wire guiding structure. For instance, a sheet may be stuck on the wire guiding structure so as to cover a part of the wire guiding structure. Typically, the restricting arrangement may extend over the whole length of the wheel unit, i.e. extends around the whole circumference of the wheel unit, or may only be provided for a segment of the wheel unit.

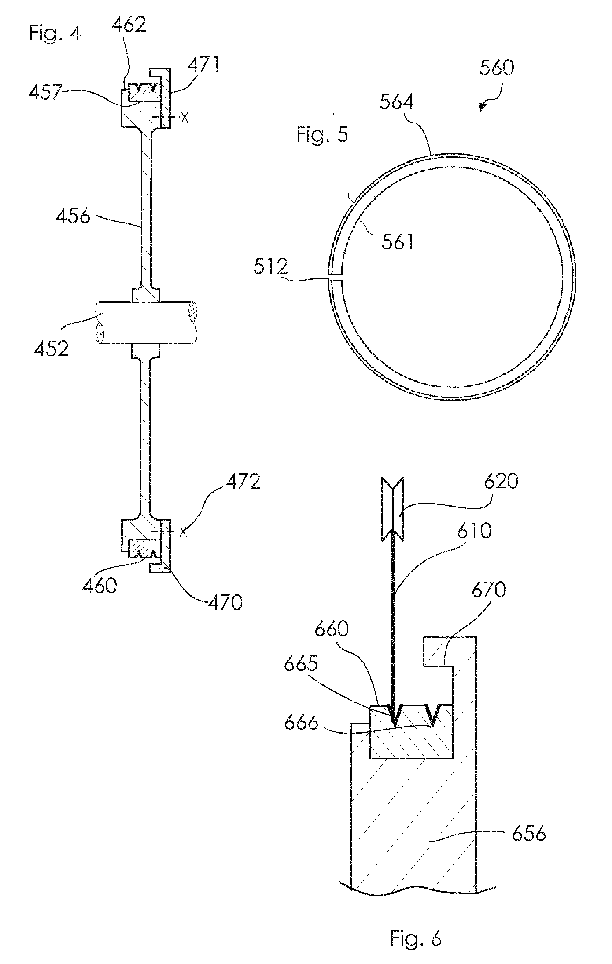

Further embodiments, which can be combined with other embodiments described herein, are now described with respect to Fig. 4. In Fig. 4, one wheel unit 456 is mounted to an axis 452. The wheel unit has a radially outer surface 457 for receiving a wire guiding structure, a detachably connectable coating with a wire guiding structure, such as the tire 460 with the grooves forming the wire guiding structure. The tire portion has a radially inner surface to be received by the radially outer surface 457 of the wheel unit 456. Further, the wheel unit 456 and the tire providing the wire guiding structure 460 may be equipped with fixation elements, engaging elements and the like so as to adapt the wheel unit as well as the tire such that the tire 460 is detachably connected to the wheel unit 456. As already described above, according to some embodiments, which can be combined with other embodiments described herein, the wire guiding structure, illustrated by reference number 460 in Fig. 4, may provide two grooves.

According to some embodiments, a restricting arrangement 470 is shown in Fig. 4. The restricting arrangement 470 is adapted to restrict or even block the usage of a portion of the wire guiding structure 460. For instance, the restricting arrangement 470 of Fig. 4 restricts the usage of one groove of the wire guiding structure by covering it. In the embodiment shown in Fig. 4, the restricting arrangement 470 is mounted to the wheel unit 456. Typically, the restricting arrangement 470 may be mounted to the wheel unit 456 by a connecting element 472, such as a screw or the like. According to other embodiments, the restricting arrangement may be mounted to the wheel unit in any other suitable way, such as being welded to the wheel unit 456, being glued to the wheel unit 456, being connected by a plug-in-connection to the wheel unit and the like.

Fig. 5 illustrates embodiments of a tire as described herein. Thereby, it is to be understood, that a wheel unit and the tire are interrelated components, which are used to form a wire guide according to yet further embodiments described herein. The tire 560 has the wire guiding structure 564, and a radially inner surface 561 to be in contact with the wheel unit. Typically, according to some embodiments, the tire can be provided as a plastic tire wherein grooves are already provided when delivered for operation. Accordingly, the replacement tire can be configured as a disposable product that is, manufactured for a single use only. The tire can thereby be already grooved before mounting the tire on the wire guide. Thus, the wire guide does not need to be shipped to a different factory for re-coating and/or re-grooving.

According to yet further embodiments, which can be combined with other embodiments described herein, the tire 560 can be provided as a ring with an opening 512, that is the tire is an opened ring. Thereby, the tire can be more easily positioned to be located radially outward of the outer surface of the wheel unit before being detachably connected to the wheel unit. Thereby, the opening 512 is to be understood as an interrupted ring. For example the interruption can be as small as 1 mm or below such as for example 0.3 to 0.7 mm.

Fig. 6 shows a part of the wheel unit having a wire guiding structure provided thereon during operation according to embodiments described herein. Typically, the wheel unit 656 is provided with a guiding structure 660 providing exemplarily two grooves 665 and 666. A restricting arrangement 670 covers a part of the wire guiding structure 460, i.e. groove 666 of the two grooves in the example shown in Fig. 6. A wire 610 is shown which is guided by groove 665. The wire is exemplarily guided to another wheel or pulley, but may also be guided to a spool or to another device present in the wire saw device.

When the groove 665 is worn, the guiding structure 660 may be dismounted, turned around and mounted again in a way so that the groove 665 is now covered by the restricting arrangement 670 and the groove 666 may be used to guide the wire 610. Thus, no alignment step is required after the exchange of the wire guiding structure because only one groove can be used with the wheel unit having the restricting arrangement. Typically, when two grooves are provided in a wire guiding structure, the tire may be used twice by turning it. A wheel unit according to embodiments described herein allows for secure alignment and easy replacement of the wire guiding structure.

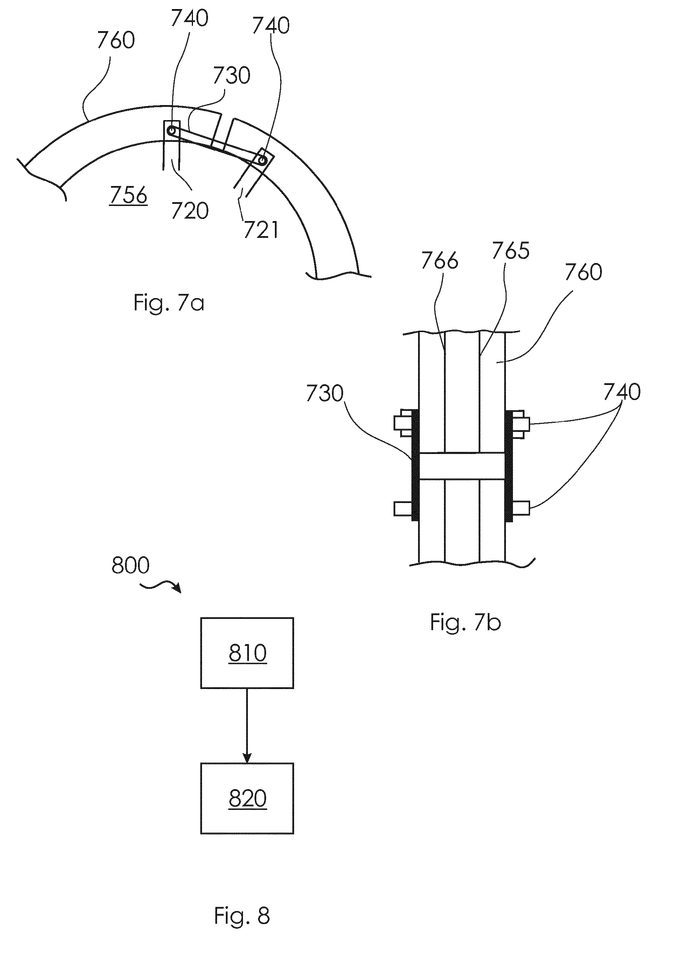

According to some embodiments, which can be combined with other embodiments described herein, a fixation element may be provided at the wheel unit for detachably connecting the tire providing the guiding structure to the wheel unit. An example of a fixation element is shown in Fig. 7a and 7b. Fig. 7a exemplarily shows a wheel unit 756 on which a tire 760 is mounted at the outer surface. Typically, clips 720 and 721 may be provided at the wheel unit. As an example, the clips may be welded to the wheel unit. According to some embodiments, protrusions 740, such as pins or the like, may be provided at the wire guide, for example provided on the respective sides of the tire 760 in a direction parallel to the rotation axis. Typically, a clamping element 730 ensures the connections between the tire 760 and the wheel unit. For the sake of clarity, the restricting arrangement is not shown in Fig. 7a and 7b.

In Fig. 7b, a top view of the embodiments shown in Fig. 7a is shown. A wire guiding structure 760, such as a tire, provides two grooves 765 and 766. In the top view of Fig. 7b, the pins 740 and the clamping element 730 can be seen.

According to some embodiments, the above described wheel unit and the wire guide may be used in a wire saw device, which can be a cropper, a squarer, a wire saw or a multiple wire saw. Thereby, a cropper is to be understood as a device, which can be used to saw end pieces from bricks or blocks, which have been separated into bricks in a squarer. A squarer is a wire saw that generally saws the silicon ingot into squares of the desired size such that a wire saw or a multiple wire saw can saw wafers from the bricks in a wafering process.

The above-described systems are particularly useful if thin wires or wires with a coating, e.g. a diamond coating, are used. Accordingly, in embodiments, which can be combined with other embodiments described herein, the wire handling sections and wire saw devices described herein are adapted for thin wires having a diameter below about 400 µm, such as diameters between about 200 µm and about 400 µm, more particularly between about 200 µm and about 300 µm. Further, the wire guiding sections and wire saw devices described herein are adapted for coated wires, for example a wire having a nickel coating with diamond particles embedded therein. Such wires may typically have a core diameter of about 300 µm to about 400 µm, e.g. 310 µm to 340 µm. For those wires a twisting of the wire might increase the risk of breaking of the wire or of damaging the coating, so that a twist-free operation is advantageous. By using diamond wire, the throughput may be increased by a factor of 2 or even more. When a diamond wire is used, further parts of the wire saw may be adapted to the diamond wire. For example, mechanical parts, electrical parts and / or software may be adapted to the use of diamond wire.

Typically, embodiments of wire guides and wheels for wire guides described herein are adapted or configured for wire saw devices, they can be used in wire saw devices and/or can be a part of a wire saw device. Besides other aspects that can be used for making the pulley adapted or configured for a wire saw device, the pulley can provide a groove structure which is made to guide a wire with a thickness of 400 µm or below, or a thickness of any of the other diameters mentioned above. Thereby, it has to be noted that the groove structure is designed especially for the wire diameter and the cutting process in order to allow for a high precision cutting, e.g. with a precision of 250 µm or below, or even of 50 µm or below.

Generally, in embodiments which may be combined with other embodiments herein, the pulleys have at least one and in embodiments all of the following radiuses. The pulley may have a diameter of between 100 mm and 150 mm, especially of 112 mm (here, the diameter means the diameter observed by the wire, i.e. diameter within the wire guiding groove). According to further embodiments, the pulley may also have a diameter of between 100 and 350 mm, such as between 140mm and 170mm, especially of 158 mm.

According to an aspect of the invention, a method for guiding a wire in a wire saw device is provided. Typically, the wire saw device may be a wire saw device as described above with respect to the wheel unit and the wire guide. In Fig. 8, an exemplary flow diagram of a method according to embodiments described herein is shown. Typically, the method 800 includes step 810, in which a wire guiding structure, such as a tire, is placed on a wheel unit of a wire guide. According to some embodiments, the wire guiding structure may be detachable connected to the wheel unit. For instance, a fixation element may be provided for detachable connecting the wire guiding structure to the wheel unit. An example of a fixation element is described with respect to Figs 7a and 7b.

According to some embodiments described herein, the wire guiding structure, which is connected to the wheel unit, may provide two grooves. Typically, the wheel unit and the wire guide may be the wheel unit and the wire guide as exemplarily described above with respect to Figs. 3a, 3b, 4, 5, and 6.

Typically, the method 800 further includes step 820, in which a portion of the wire guiding structure is blocked during operation of the wire guide. According to some embodiments, a portion of the wire guiding structure is blocked by a restricting arrangement as described with respect to Figs. 3a, 3b, 4, 5, and 6. As an example, the wire guiding structure includes grooves, one of which is blocked by covering it during operation of the wire guide.

According to an aspect of the present invention, a wheel unit for a rotating wire guide having a rotation axis is provided. The wire guide is configured for a wire saw device having a wire. Typically, the wheel unit includes a radially outer surface for receiving a wire guiding structure in a predetermined position; and a restricting arrangement for restricting the usage of a portion of the wire guiding structure during operation. According to some embodiments, the wheel unit may be adapted to accommodate a fixation element for detachably connecting the wire guiding structure to the wheel unit. Typically, the outer surface of the wheel unit may be essentially flat. In an exemplary embodiment, the restricting arrangement may block the usage of a portion of the wire guiding structure during operation. Typically, the restricting arrangement is detachable connected to the wheel unit. In some embodiments, the restricting arrangement may be adapted to restrict the usage of a groove of a wire guiding structure being formed as two grooves.

According to a further aspect, a wire guide configured for a wire saw device having a wire is provided. The wire guide may include a wheel unit as described above and a tire. Typically, the tire includes a tire portion having a radially inner surface adapted to be received at a radially outer surface of the wheel unit; and a wire guiding structure provided at a radially outer surface of the tire portion for guiding the wire. Typically, the wire guiding structure may include two grooves. According to some embodiments, the wheel unit may be adapted to accommodate a fixation element for detachably connecting the wire guiding structure to the wheel unit. According to some further embodiments, the tire may be adapted for being fixed to a fixation element of the wheel unit. Typically, the tire consist essentially of plastic material.

According to yet a further aspect, a method for guiding a wire via a wire guide configured for a wire saw device is provided. The method includes placing a tire having a wire guiding structure on a wheel unit of the wire guide; and blocking a portion of the wire guiding structure during operation of the wire guide. Typically, the wire guiding structure of the tire may include two grooves. According to some embodiments, blocking a portion of the wire guiding structure may include covering one groove of the grooves forming the wire guiding structure. According to some further embodiments, the method may include fixing the tire on the wheel unit by fixation elements.

Typically, by using the wheel unit and the wire guide according to embodiments described herein, the wire guiding structure is separated from the wheel unit, which allows for easy exchange of the wire guiding structure, when the wire guiding structure is worn. Further, it is possible to quickly fix the coating of the ends of the wire guiding structure by a simple clip system. According to some embodiments, by using two grooves of a wire guiding structure having a restricting arrangement as described above, the alignment of the wire guiding structure is ensured, as only one groove can be used, thereby avoiding the risk of choosing a wrong groove. Choosing the wrong groove would influence the operation of the wire saw in a negative way, such as facilitating wire breakage and the like. Further, using the wheel unit and the wire guide according to embodiments described herein, the quality of the alignment of the wire guide is ameliorated. The risk of misalignment of the wire is avoided by guiding the wire by the wire guides as described herein. At the same time, the down time for the exchange of the wire guiding structure is reduced and the exchange of the wire guiding structure facilitated.

While the foregoing is directed to embodiments of the invention, other and further embodiments of the invention may be devised without departing from the basic scope thereof, and the scope thereof is determined by the claims that follow.

## Claims

1. A wheel unit (356; 456; 656; 756) for a rotating wire guide (336) having a rotation axis, the wire guide is configured for a wire saw device (100) having a wire, the wheel unit comprising:
a radially outer surface (357; 457) for receiving a wire guiding structure (360; 460; 560; 660; 760) in a predetermined position; and
a restricting arrangement (370; 470; 670) for restricting the usage of a portion of the wire guiding structure (360; 460; 560; 660; 760) during operation.

2. The wheel unit according to claim 1, wherein the wheel unit (356; 456; 656; 756) is adapted to accommodate a fixation element (720; 721) for detachably connecting the wire guiding structure (360; 460; 560; 660; 760) to the wheel unit.

3. The wheel unit according to any of the preceding claims, wherein the outer surface (357; 457) of the wheel unit (356; 456; 656; 756) is essentially flat.

4. The wheel unit according to any of the preceding claims, wherein the restricting arrangement (370; 470; 670) is adapted to block the usage of a portion of the wire guiding structure (360; 460; 560; 660; 760) during operation.

5. The wheel unit according to any of the preceding claims, wherein the restricting arrangement (370; 470; 670) is detachable connected to the wheel unit (356; 456; 656; 756).

6. The wheel unit according to any of the preceding claims, wherein the restricting arrangement (370; 470; 670) is adapted to restrict the usage of a groove (365; 665; 666) of a wire guiding structure (360; 460; 560; 660; 760) being formed as two grooves.

7. A wire guide configured for a wire saw device having a wire, the wire guide comprises:
a wheel unit (356; 456; 656; 756) according to any of claims 1 to 6; and
a tire, comprising:
a tire portion having a radially inner surface adapted to be received at a radially outer surface (357; 457) of the wheel unit (356; 456; 656; 756); and
a wire guiding structure (360; 460; 560; 660; 760) provided at a radially outer surface (357; 457) of the tire portion for guiding the wire.

8. The wire guide according to claim 7, wherein the wire guiding structure (360; 460; 560; 660; 760) comprises two grooves (365; 665; 666).

9. The wire guide according to any of claims 7 to 8, wherein the wheel unit (356; 456; 656; 756) is adapted to accommodate a fixation element (720; 721) for detachably connecting the wire guiding structure (360; 460; 560; 660; 760) to the wheel unit.

10. The wire guide according to any of claims 7 to 9, wherein the tire is adapted for being fixed to a fixation element (720; 721) of the wheel unit (356; 456; 656; 756).

11. The wire guide according to any of claims 7 to 10, wherein the tire consists essentially of plastic material.

12. A method for guiding a wire via a wire guide (336) configured for a wire saw device (100), the method comprising:
Placing a tire having a wire guiding structure (360; 460; 560; 660; 760) on a wheel unit (356; 456; 656; 756) of the wire guide (336); and
Blocking a portion of the wire guiding structure (360; 460; 560; 660; 760) during operation of the wire guide (336).

13. The method according to claim 12, wherein the wire guiding structure (360; 460; 560; 660; 760) of the tire comprises two grooves (365; 665; 666).

14. The method according to any of claims 12 to 13, wherein blocking a portion of the wire guiding structure (360; 460; 560; 660; 760) comprises blocking one groove (365; 665; 666) of the grooves forming the wire guiding structure.

15. The method according to any of claims 12 to 14, further comprising fixing the tire on the wheel unit (356; 456; 656; 756) by fixation elements (720; 721).
